Europäisches Patentamt

European Patent Office

Office européen des brevets

(11) Publication number: **0 129 327**
**A2**

## (12) EUROPEAN PATENT APPLICATION

(21) Application number: **84303314.3**

(22) Date of filing: **16.05.84**

(51) Int. Cl.³: **G 05 B 19/407**

(30) Priority: **20.05.83 US 496459**

(43) Date of publication of application:
**27.12.84 Bulletin 84/52**

(84) Designated Contracting States:
**AT BE CH DE FR GB LI LU NL SE**

(71) Applicant: **PROCONICS INTERNATIONAL INC.**
**163 F New Boston Street**
**Woburn, MA 01801(US)**

(72) Inventor: **Ward, Stephen A.**
**95, South Street**
**Chestnut Hill Massachusetts(US)**

(74) Representative: **Deans, Michael John Percy et al,**
**Lloyd Wise, Tregear & CO. Norman House 105-109**
**Strand**
**London WC2R OAE(GB)**

(54) Timing signal generator.

(57) Circuitry for providing timing signals spaced in time by a varying amount includes calculating means for repetitively performing a calculation to repetitively provide calculation signals the value (SUM) of which varies as a function of the number of times the calculation has been repeated, and timing signal generating means for receiving the calculation signals and providing a series of timing signals spaced in time by varying amounts. A timing signal is generated each time the value (SUM) has changed by a set amount (ACC).

FIG. 3

EP 0 129 327 A2

# TIMING SIGNAL GENERATOR

## Background of the Invention

The invention relates to apparatus for providing timing signals spaced in time by a varying amount, and in particular to apparatus for providing timing signals to a stepping motor.

A stepper motor rotates a given angle in response to each digital step signal that it receives, and in many applications it is desirable to accelerate a stepper motor at a fixed maximum rate. To cause acceleration of the stepper motor, it is necessary to successively decrease the time periods between the step signals; specifically, the time period between timing signals should be proportional to the reciprocal square root of the number of steps that have been taken.

## Summary of the Invention

In general the invention features circuitry for providing timing signals spaced in time by a varying amount, the circuitry including calculating means for repetitively performing a calculation to repetitively provide calculation signals the value (SUM) of which varies as a function of the number of times the calculation has been repeated, and timing signal generating means for receiving the calculation signals and providing a series of timing signals spaced in time by varying amounts, a timing signal being generated each time the value (SUM) has changed by a set amount (ACC).

In preferred embodiments the circuitry includes a programmable digital computer and program, the calculating means and the timing signal generating means being implemented as steps of the program; the calculating means repetitively provides calculation signals the value (SUM) of which varies quadratically with respect to the number of times the calculation has been repeated; the calculating means provides the calculation signals spaced in time by equal amounts; the timing signal generating means includes means to compare SUM with a comparison value and comparison adjustment means to adjust the comparison value each time a timing signal is generated (preferably either by decreasing SUM by the set amount ACC or by setting the comparison value to the product of ACC and NSTEPS, where NSTEPS is the number of timing signals that have been generated); the calculating means includes count adjustment means to adjust the value N of a count signal each time a calculation signal has been provided, so that SUM varies quadratically with respect to N; the count adjustment means includes means to selectively increase N each time a calculation signal is provided or decrease N each time a calculation signal is provided or cause N to remain the same each time a calculation signal is provided, so that the period between the timing signals respectively decreases, increases or remains the same with respect to time; the timing signal generating means includes acceleration/deceleration means to selectively adjust the count adjustment means in response to the number of timing signals that have been provided; the apparatus is used to provide timing signals for a stepper motor to operate a given number of steps by accelerating at a constant rate to a fixed speed, by operating at the fixed speed and by decelerating at a constant rate so that the given number of steps is reached as the deceleration is completed, and the count adjustment means increases N each time a calculation signal is provided until N reaches a value corresponding to the fixed speed, the acceleration/deceleration adjustment means provides a signal indicating how many steps were required to reach the fixed speed, and the count adjustment means maintains N at that value until the number of steps remaining to reach the given number of steps equals the number required to reach the fixed speed, at which time N is decreased each time a calculation signal is provided; the repetitive calculation comprises repetitively adding N + N + 1 or repetitively adding N.

Using the invention, one can simply and efficiently provide timing signals, e.g. by using simple adding, subtracting and comparison operations, without the need for more complicated multiplication, division or square root operations. In particular the invention can be used to efficiently and simply drive a stepper motor to provide a given number of steps in a given time at maximum permissible acceleration, deceleration and speed.

Other features and advantages of the invention will be apparent from the following description of the preferred embodiment, and from the claims.

### Description of the Preferred Embodiment

Fig. 1 is a diagram of apparatus driven by a stepper motor according to the invention.

Fig. 2 is a functional block diagram of circuitry used to provide timing signals in the Fig. 1 stepper motor apparatus.

Fig. 3 is a flow chart of a program implemented by the Fig. 2 circuitry.

Fig. 4 is a flow chart of an alternative method to provide timing signals spaced in time by a varying amount.

Fig. 5 is a partial functional block diagram

- 4 -

for circuitry to carry out said alternative method.

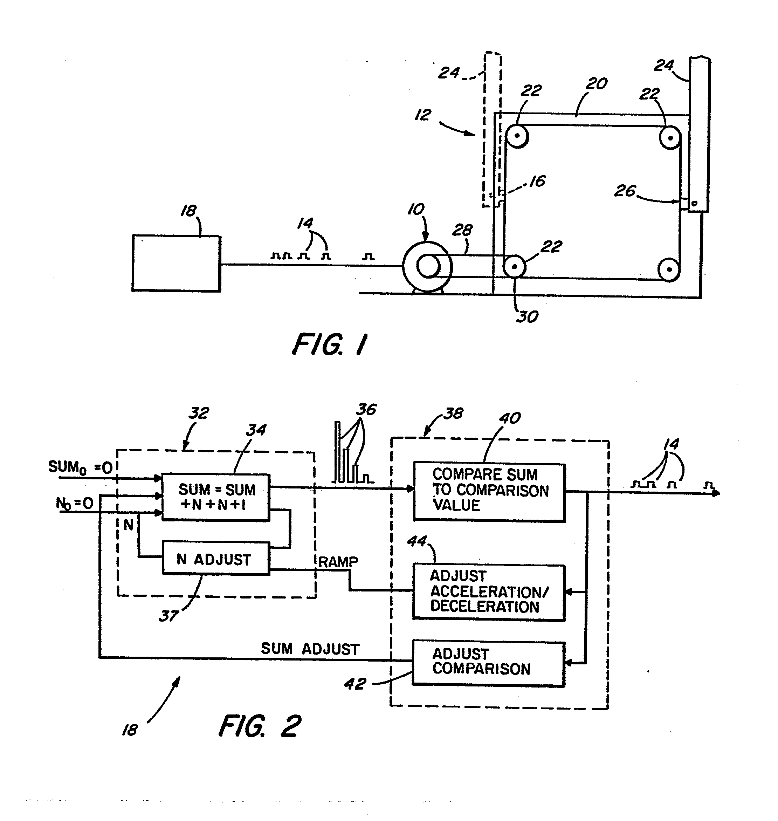

Referring to Fig. 1, there is shown stepper motor 10 for driving apparatus 12 in response to timing signals 14 provided by timing signal circuitry 18. Apparatus 12 includes chain 20 supported by sprockets 22 and arm 24 connected by means 26 to chain 20. Stepper motor 10 drives apparatus 12 via chain 28, which drives sprocket 30 connected to lower left hand sprocket 22. Apparatus 12 is described in more detail in pending patent application U.S. Serial No. 381,292 filed May 24, 1982, which is hereby incorporated by reference.

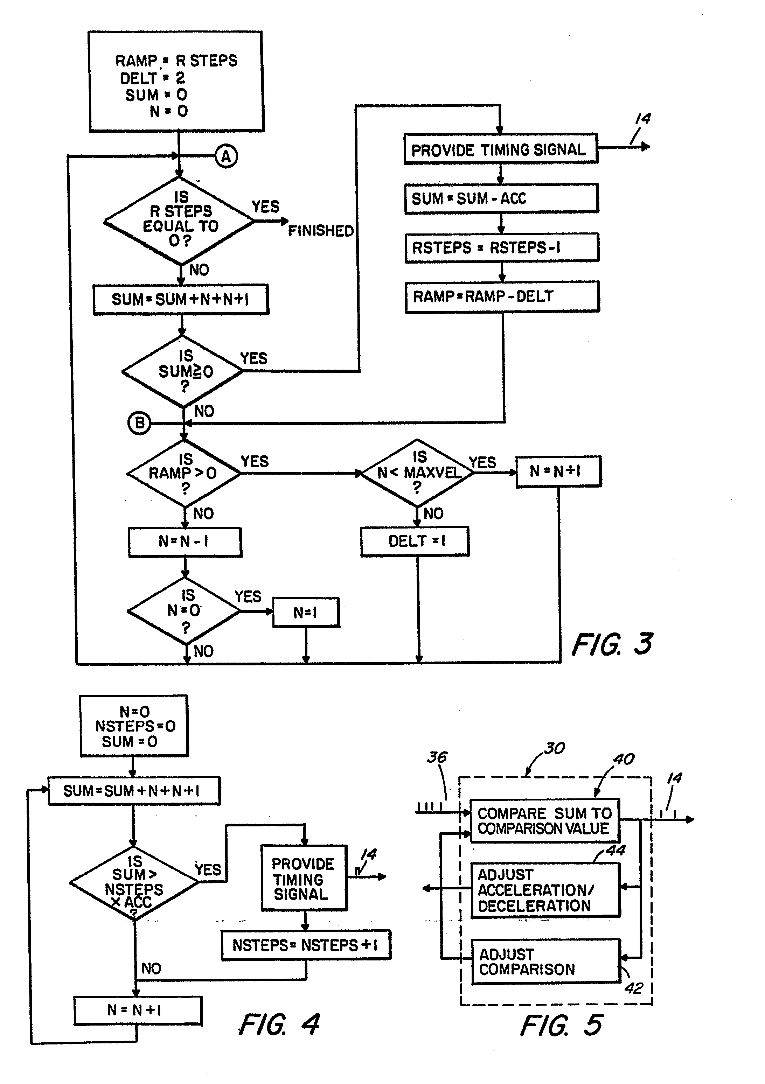

Referring to Fig. 2, a functional block diagram for circuitry 18 (an Intel 8080 microprocessor controlled by the program described in the flow chart of Fig. 3) is shown. Circuitry 18 includes calculating means 32, which repetitively performs a simple calculation via summing means 34 such that the value SUM of the output signals 36 varies quadratically with respect to the number of times that the calculation has been repeated. Calculating means 32 also includes count adjustment means 37 to adjust the value of N after each repetitive calculation has been completed.

Calculation signals 36 are repetitively spaced in time by a constant amount and are provided to timing signal generating means 38, including comparison means 40, comparison adjustment means 42 and acceleration/ deceleration means 44. Comparison means 40 compares the value SUM of calculation signals 36 with a comparison value and provides timing signals 14 each time that the value SUM exceeds the comparison value. Comparison adjustment means 42 provides a SUM adjustment signal to summing means 34 each time that a timing signal 14 has been provided. Acceleration/deceleration means 44 provides a signal to count adjustment means 37 after a plurality of timing signals 14 have been provided to control whether count adjustment means 37 increases or decreases after each calculation signal 36 to provide acceleration, constant speed, or deceleration.

In operation, circuitry 18 provides timing signals 14 to stepper motor 10 to drive arm 24 via chain 26 in both vertical and horizontal directions from the position shown between the right hand sprockets 22 in Fig. 1 to a position between the left hand sprockets 22 (as is shown in phantom in Fig. 1). After a certain operation occurs, arm 24 is moved back to the position between the right hand sprockets 22. The travel between the two positions takes a certain total number of steps of stepper motor 10. It is desirable that the travel between the two positions be accomplished in as short a time as possible; thus, stepper motor 10 is accelerated at a maximum permissible rate until a maximum speed is reached, and then it travels through a number of steps at the maximum speed and decelerates at a maximum deceleration rate to the end position. Timing signals 14 are shown diagrammatically in both Figs. 1 and 2 to have decreasing periods of time between successive signals to provide acceleration. During the constant speed portion of the travel, timing signals 14 are separated in time by constant amounts. During the deceleration portion of the travel, the period of time between successive timing signals 14 increases.

During the acceleration portion of travel, the period between timing signals 14 is proportional to the reciprocal square root of the number of timing signals 14 that have been received so far. Timing signal generating means 38 provides signals 14 spaced in time by the desired varying time periods based upon the time it takes calculating means 32 to perform a repetitive calculation, regardless of the value of the calculated number. Specifically, calculating means 32 provides calculation signals 36 repetitively spaced in time by the time it takes summing means 34 to perform a simple addition step, and timing signal generating means 38 provides time signals 14. Timing signals 14 are provided when the value SUM changes by a prescribed constant amount ACC, and are spaced in time by varying amounts, because the value SUM of calculation signals 36 increases as the square of the number of calculations (generally equal to N) or as the square of time. During the acceleration stage, count adjustment means 37 increases N by one during each successive addition step of summing means 34. During the constant speed portion of travel, N remains constant; although SUM is increasing, it is increasing at a constant rate and not at a quadratically varying rate so that the timing between timing signals 14 is constant. During the deceleration phase of travel, count adjust means 37 decreases the value of N so that the value SUM decreases quadratically with time, and the time period between timing signals 14 increases with time.

Turning to Fig. 3, there is shown a flow chart for the computer program that provides timing signals 14. A listing of the program (in assembly language for the Intel 8080) is included below. The program of Fig. 3 implements the changes between the three modes of stepper motor operation (acceleration, deceleration, and constant speed) using the variable RAMP. The number of steps (or timing signals 14) taken in the acceleration and deceleration modes are equal.

RAMP is intialized to the total number of steps RSTEPS
remaining to be taken, and is decremented by two each
time there is a timing signal 14 during the acceleration
mode until the maximum fixed velocity is reached.  N is
incremented by one during the acceleration mode until
the maximum velocity (related to N) is reached.  The
value of RAMP remaining at the end of the acceleration
mode is precisely the number of constant velocity steps
to be taken, and RAMP is decremented by one for the
constant velocity steps, while N remains constant.  When
RAMP is equal to zero, the deceleration mode begins, and
N is decremented by one until N equals zero, at which
time the number of remaining steps, RSTEPS, equals zero.

       Referring specifically to Fig. 3, initially the
variable RAMP is set to the total number of steps
remaining to be taken, or to RSTEPS; DELT, the number by
which RAMP is decremented, is set equal to two; SUM is
set equal to zero, and N is set equal to zero.
Beginning the loop at point A on the flow chart, SUM is
initially increased by adding to it N + N + 1.  As N is
repetitively increased by one with each calculation from
0 to 1 to 2 to 3 to 4, etc., N + N + 1 increases from 1
to 3 to 5 to 7 to 9 (i.e., the values are consecutive
odd integers) and SUM increases from 1 to 4 to 9 to 16
to 25, etc.; i.e., SUM increases quadratically with
respect to the number of times N that the calculation
has been repeated.

       Each time that SUM is greater than or equal to
zero, a timing signal 14 is provided; SUM is decreased
by constant amount ACC; the number of steps remaining to
be taken, RSTEPS, is decremented by one; RAMP is
decremented by two, and the computer is now at point B
on the flow chart.  RAMP is still greater than zero after

- 8 -

the first timing signal 14 has been provided, and N is still less than a constant MAXVEL (a value corresponding to N when the velocity of stepping motor 10 is at its fixed maximum value); thus N is increased by one and the loop begins again at point A.

This time the SUM starts out at -ACC and is increased by N + N + 1. SUM is less than zero; RAMP is still greater than zero; N is still less than MAXVEL; and N is increased by one through a plurality of repetitive summing calculations with SUM increasing quadratically with respect to the number of calculations until once again it is greater than or equal to zero. At this point, once again, a timing signal 14 is provided; the SUM is decreased by the constant ACC; RSTEPS is decremented by one; RAMP is decremented by DELT, and the computer is at point B on the flowchart. Assuming that RAMP is still greater than zero, and N is less than MAXVEL, N is increased by one, and SUM, which has just had the constant ACC subtracted from it, is increased by N + N + 1. The computer continues to go through the loop after point B involving an increase in N by one during the repetitive calculations until once again SUM is greater than or equal to zero (in other words until SUM has increased by the amount ACC again). Because N is continuously increasing, the number of loops or repetitive calculations it takes SUM to increase from -ACC to zero decreases, and thus the time periods between timing signals 14 also decreases. This continues until the maximum velocity is reached, at which point N is greater than or equal to MAXVEL.

At this point stepper motor 10 goes in-to the constant velocity mode, by continuing the repetitive calculations with N being a constant value, and DELT is set equal to one. Because N is constant, the number of steps it takes SUM to increase from -ACC to zero is constant, and the time periods between timing signals 14 are constant. Each time that a timing signal 14 is provided, RAMP is now decremented by one (because DELT has been set equal to one).

When RAMP equals zero the constant velocity mode is complete, and stepper motor 10 goes into the deceleration mode. At this point N is decremented by one, and thus each time a timing signal 14 is provided, it takes longer and longer for SUM to be increased from -ACC to zero, because SUM is increased during each repetitive calculation by a smaller value. When N equals zero, RSTEPS also equals zero, and travel of arm 24 is complete.

Listings of the program used by circuitry 18 in C language and in assembly language(slightly modified, as described below) are as follows:

```
:   Slick(acc. maxvel. nsteps. motor)
:    long acc:
:    short maxvel. nsteps:
:    {
:          short n. delt. ramp:
:          long sum:
:          ramp = nsteps:
:          delt = 2:
:
:          sum = 0:
:          n = 0:
:          do {    sum += (n+n+1):          /* giving
          real squares */
:                    if (sum >= 0)
:                            { sum -= acc:
:                              Step(motor):
:                              nsteps--:
:                              ramp -=delt:
:                            }
:                    if (ramp > 0)
:                            { if (n < maxvel) n++:
:                              else delt = 1: }
:                    else    { if (--n == 0) n = 1: }
:
:              }(while nsteps:)
:    }

              maclib  bds          : system info and
                                     run-time constants
              maclib cmac          : macro library

              direct               : function directory
```

```
        define slick
        enddir

: slick(m. nsteps)
:    struct Motor {
:                              int acc:        /* 0
                              accelleration constant */
:                              int maxvel:     /* 2 max
                              velocity              */
:                              unsigned where: /* 4
                              absolute position    */
:                              char phase:     /* 6 motor
                              phase                */
:                              char phmask:    /* 7 phase
                              mask: 7. for 8-phase  */
:                              char *phtap:    /* 8 phase
                              table pointer        */
:                              char port:      /* 10 port
                              number               */
:                              char outmask:   /* 11
                              output mask          */
:                         } .*m:
:    int nsteps:

:            prelude slick           : main entry point

: Set up statics:
:        arg1: struct Motor pointer
:        arg2: signed nsteps
:        arg3: abs(nsteps)
:        arg4: output routine
:        arg5: n (current count)
:        arg6: ramp
```

```
      :           arg7: Sum1. Sum2

   : register assignments:
   :           B:    Sum0 (low order byte of 3-byte sum)
   :           C:    delt

             call    arghak      : copy the args
                                   into arg1. arg2.
                                   etc.
             push    b           : save BC on the
                                   stack

Following code sets up a little output routine in
  RAM allocated from
  the stack.  It copies the prototype routine from
  ROM at s191. filling
  in port number (2 places) and outmask (1 place)
  in the copy.
Pointer to copy is left in global location arg4.

             push    b           : reserve 8 bytes
                                   for our
             push    b           : little output
                                   routine
             push    b
             push    b
             lxi     h.0
             dad     sp
             snld    arg4        : ptr to 8-byte
                                   region.

             lhld    arg1        : fetch port.
                                   outmask from
                                   struct Motor
```

```
120:        lxi     d.10        : offset for port
121:        dad     d           : points to port
                                  number
122:        mov     e.m         : port.
123:        inx     h           : points to outmask
124:        mov     d.m         : outmask.
125:
126:        reloc (lxi b.).s191 : ptr to prototype
                                  routine
127:        lhld    arg4        : ptr to copy
128:        ldax    b           : IN
129:        inx     b
130:        mov     m.a
131:        inx     h
132:        mov     m.e         :port
133:        inx     b
134:        inx     h
135:        idax    b           : ANI
136:        mov     m.a
137:        inx     b
138:        inx     h
139:        mov     m.d         : outmask
140:        inx     b
141:        inx     h
142:        ldax    b           : ORA E
143:        mov     m.a
144:        inx     b
145:        inx     h
146:        ldax    b
147:        mov     m.a         : OUT
148:        inx     b
149:        inx     h
150:        mov     m,e         : port
151:        inx     b
```

```
              inx     h
              ldax    b              : ret
              mov     m,a

              lhld    arg2           : nsteps
              mov     a.h
              ora     a              : is it negative?
              reloc jp,s132          : nope.
              mov     a.h            : negate it.
              cma
              mov     h,a
              mov     a.l
              cma
              mov     l.a
              inx     h              : 2s complement.
s132:         shld    arg3           : abs nsteps.
              shld    arg6           : ramp=nsteps.

              lxi     h.0            : clear some stuff.
              shld    arg7           : Sum=0
              mov     b.h
              mvi     c.2            : delt=2

              lxi     h.MINVEL       : minimum velocity
              shld    arg5           : n=MINVEL


: the main loop:
: Sum += n

s10:          lda     arg5           : n0
              add     b
              mov     b.a
              lxi     h.arg7         : for adds to memory.
```

```
        lda     arg5+1
        adc     m
        mov     m.a
        inx     h               : high byte carry
                                  propagate
        mov     a.m             : Sum2
        aci     0
        mov     m.a

: if (Sum >= 0)

        reloc jm,sll            : not >=0.

: Sum -= acc

        lhld    arg1            : struct Motor
                                  pointer.
        mov     e.m             : acc0
        inx     h
        mov     d.m
        lhld    arg7            : high 16 sum bits.
        dad     d               : Sum 12 + acc
                                  (which must be
                                  negative)
        shld    arg7

        lhld    arg3            : nsteps--:
        dcx     h
        shld    arg3

        lhld    arg6            : ramp -= delt
        mov     a.l
        sub     c
        mov     l.a
```

```
        mov     a.h
        sbi     0
        mov     h.a
        shld    arg6

: here we step the motor.  First. find which
  direction we're going

        lxi     d,4
        lhld    arg1            : point to Motor->
                                  where.

        dad     d
        mov     e.m
        inx     h
        mov     d.m             : DE = m->where.
        inx     h               : HL = &(m->phase).

        lda     arg2+1          : high nsteps. for
                                  sign bit

        ora     a
        reloc jp,sl3            : go forward.

        dcx     d               : go backward.
        mov     a.m             : new phase...
        dcr     a
        reloc jmp,sl33

sl3:    inx     d               : go forward
        mov     a.m             : new phase...
        inr     a

sl33:   dcx     h               : store away
                                  updated  m->
                                  where...
```

```
mov     m.d
dcx     h
mov     m.e
inx     h
inx     h
inx     h              : m->mask.
ana     m              : and it back...

dcx     h
mov     m.a            : store away the
                         phase.
mov     e.a            : use phase to
                         index table.
ra      a
mov     d.a            : DE = new phase
inx     h              : HL->phmask
inx     h              : HL->phtab
mov     a.m
inx     h
mov     h.m            : high phtab
mov     l,a            : low phtab
dad     d              : phtab[phase]

reloc   <lxi d,>.sl4   : for a return adr
push    d              : to emulate a call.
mov     e.m            : grab the new
                         output byte in E
lhld    arg4           : our constructed
                         output routine.
pchl                   : enter it.

: the return point:
```

```
s14:


: if (ramp>0) ...


s11:      lhld      arg6          : ramp
          mov       a,h
          ora       a
          reloc jm,s12
          ora       l
          reloc jz,s19          : ramp == 0 ...
                                    don't change n.


: here on ramp>0.  if (n<maxvel) n=maxvel: just
    checks for zero.

          lhld      arg1          : struct Motor ptr
          inx       h
          inx       .h            : point to maxvel
          mov       e.m
          inx       h
          mov       d.m
          lhld      arg5          : n
          dad       d             : n+maxvel. which
                                    must be negative
          mov       a.h           : is n=maxvel?
          ora       l
          reloc jz,s111         : yup. don't go
                                    faster.

          lhld      arg5          : else. increment n
                                    once more.
          inx       h
          snld      arg5
          reloc jmp,s19         : to close the loop.
```

```
: here on n=maxvel: delt = 1.

s111:    mvi      c.1
         reloc jmp,s19

: here on ramp <=0... if (--n == MINVEL) n=MINVEL.

s12:     lxi      d.-MINVEL
         lhld     arg5
         dcx      h              : --n
         shld     arg5
         dad      d              : --n - MINVEL
         mov      a,h
         ora      a
         reloc jp,s19            : if --n >= MINVEL
         lxi      h.MINVEL       : else. n = MINVEL
         snld     arg5

: Here to close the loop: repeat so long as nsteps>
     1.

s19:     lhld     arg3           : nsteps
         mov      a.h
         ora      1
         reloc jnz.s10           : to keep looping.

: clean up, exit:

         pop      b              : Remove the output
                                   routine
         pop      b
         pop      b
         pop      b
```

```
          pop     b
          lxi     h,0        ; always return 0.
                             for now.
          ret

; little prototype output routine: port and mask
    pet filled in by
;   initialization code in the copy made on the
    stack.
; ANDs existing output value with outmask. ORs in
    contents of E.
;   and outputs the result (so as not to disturb
    other bits).

sl9l:     in      0          ; 0: read the port
          ani     0          ; 2: mask filled in
          ora     e          ; 4: OR with new
                             value from E
          out     0          ; 5: port pets
                             filled in.
          ret                ; .7:

          postlude    slick
```

- 10 -

## Other Embodiments

Other embodiments of the invention are within the scope of the following claims.

For example, in Figs. 4 and 5 are shown a modified partial flow chart and a corresponding modified timing signal generating means. In this embodiment, SUM is once again repetitively increased by N + N + 1, but instead of comparing the value SUM with zero and decreasing SUM by the constant ACC each time that a timing signal 14 is provided, in this case SUM is compared to the product of NSTEPS (the number of steps taken so far) times the constant ACC. Thus each time a timing signal 14 is provided, the comparison value, NSTEPS times ACC, increases by the amount ACC; thus SUM is required to increase by the amount ACC again before another timing signal is provided, and with increases in the value N, the time it takes to increase by ACC decreases.

Also, in place of repetitively adding odd numbers (the N + N + 1 computation described above and in the C language listing) to have SUM increase as $(N + 1)^2$, other quadratic repetitive calculations can be used. For example, one can repetitively add N to have SUM increase as $N(N-1)/2$ or $N^2/2 - N/2$ (as in the assembly language listing); as SUM gets larger, $N^2/2$ predominates so that SUM is still effectively quadratic with respect to N.

1

CLAIMS

1. Circuitry for providing timing signals spaced in time by a varying amount, said circuitry comprising,

calculating means for repetitively performing a calculation to repetitively provide calculation signals the value (SUM) of which varies as a function of the number of times said calculation has been repeated, and

timing signal generating means for receiving said calculation signals and providing a series of timing signals spaced in time by varying amounts, one said timing signal being generated each time said value (SUM) has changed by a set amount (ACC).

2. The circuitry of claim 1 wherein said circuitry comprises a programmable digital computer and program, and wherein said calculating means and said timing signal generating means are implemented as steps of said program.

3. The circuitry of claim 1 wherein said calculating means repetitively provides calculation signals the value (SUM) of which varies quadratically with respect to the number of times said calculation has been repeated.

4. The circuitry of claim 3 wherein said calculating means provides said calculation signals spaced in time by equal amounts.

5. The circuitry of claim 4 wherein said timing signal generating means includes means to compare SUM with a comparison value, and comparison adjustment means to adjust said comparison value each time a timing signal is generated.

6. The circuitry of claim 5 wherein said comparison adjustment means includes means to decrease SUM by said set amount ACC.

7. The circuitry of claim 5 wherein said comparison adjustment means includes means to set said comparison value to the product of ACC and NSTEPS, where NSTEPS is the number of timing signals that have been generated, and ACC is a constant.

8. The circuitry of claim 4 wherein said calculating means includes count adjustment means to adjust the value N of a count signal each time a said computation signal has been provided so that SUM varies quadratically with respect to N.

9. The circuitry of claim 8 wherein said count adjustment means includes means to increase N each time a said calculation signal is provided, whereby the value SUM increases with each repetitive calculation, and the period between said timing signals decreases with time.

10. The circuitry of claim 8 wherein said count adjustment means includes means to decrease N each time a said calculation signal is provided, whereby the value SUM decreases with each repetitive calculation, and the period between said timing signals increases with time.

- 3 -

11. The circuitry of claim 3 wherein said calculating means includes count adjustment means to adjust the value N of a count signal each time a said calculation signal has been provided, wherein SUM varies quadratically with respect to N, and wherein said count adjustment means includes means to selectively increase N each time a said calculation signal is provided or decrease N each time a said calculation signal is provided or cause N to remain the same each time a said calculation signal is provided, whereby the period between said timing signals respectively decreases, increases or remains the same with respect to time.

12. The circuitry of claim 11 wherein said timing signal generating means includes acceleration/deceleration means to selectively adjust said count adjustment means in response to the number of timing signals that have been provided.

13. The circuitry of 11 wherein said apparatus is used to provide timing signals for a stepper motor to operate a given number of steps by accelerating at a constant rate to a fixed speed, by operating at said fixed speed and by decelerating at a constant rate so that said given number of steps is reached as the deceleration is completed, and wherein said count adjustment means increases N each time a calculation signal is provided until N reaches a value corresponding to said fixed speed, and wherein said acceleration/deceleration adjustment means provides a signal indicating how many steps were required to reach said fixed speed, and said count adjustment means maintains N

- 4 -

at that value until the number of steps remaining to reach said given number of steps equals the number required to reach said fixed speed, at which time N is decreased each time a said calculation signal is provided.

14.    The circuitry of claim 8 wherein said repetitive calculation is repetitively adding N + N + 1.

15.    The circuitry of claim 8 wherein said repetitive calculation is repetitively adding N.

16.    The combination of the circuitry of claim 1 and apparatus capable of being driven by said timing signals.

17.    The combination of claim 14 wherein said apparatus is a stepper motor that rotates a given angle in response to each said timing signal.

FIG. 1

FIG. 2

*FIG. 3*

*FIG. 4*

*FIG. 5*